# EUROPEAN PATENT SPECIFICATION

(11) **EP 1 334 654 B1**
(45) Date of publication and mention of the grant of the patent: **23.05.2007**
(21) Application number: 03075378.4
(22) Date of filing: 07.02.2003
(51) Int. Cl.: A01G 5/00

(54) **Flower sorter**
Blumensortiervorrichtung
Trieuse de fleurs

(30) Priority: 07.02.2002 EP 02075485
(43) Date of publication of application: 13.08.2003
(73) Proprietor: FPS Food Processing Systems B.V., 2631 RE Nootdorp (NL)
(72) Inventor: Tas, Johannes Cornelis Joseph, 2631 GS Nootdorp (NL)
(74) Representative: Prins, Adrianus Willem

(56) References cited:
- EP-A- 0 292 378
- EP-A- 0 449 386
- EP-A- 1 201 114
- NL-A- 8 500 425

## Description

The present invention relates to a flower sorter, more specifically to an apparatus as set forth in the preamble of the main claim.

Such an apparatus is known, for instance from applicant's European patent application 01204055.6, disclosing a sorting apparatus which, having an improved fork transfer, is capable of taking over in particular several large flowers, such as roses, from, for instance, a fixedly arranged hang-in fork, and carries these flowers along the path of an endless conveyor chain along at least a single detection station and, after selection, delivers them at the proper position along the path, for instance to be bunched with other selected roses. The hang-in fork makes it possible for roses to be hung-in manually as well as to be hung in readiness. Although this results in a higher handling speed, this speed is limited by this very speed of manual hanging-in. Document EP-0449386 discloses a further apparatus for sorting flowers.

To provide a solution to that end, the apparatus according to the present invention is characterized in that the apparatus further comprises at least a single hang-in buffer conveyor with an endless buffer transport element having buffer forks attached thereto, from which the flowers hanging therein are taken over by the forks mentioned, while the passing speed of the forks, Nᵥ, and that of the buffer forks, N_{b}, meet Nᵥ > N_{b}.

What is thus achieved with great advantage is not only that manual hanging-in, and hence a careful handling of such delicate products, can be maintained, but especially that in this way a high degree of filling can be obtained by choosing, in accordance with the speed differences between the conveyor and the buffer conveyor, the correct number of these buffer conveyors.

A further elaboration of the apparatus according to the invention is characterized in that the conveyor chain and the buffer transport element are driven, while mutually coupled, with a control element, and more in particular that the buffer transport element comprises a buffer chain, and that the control element comprises a gear transmission coupling. In a suitable manner, thus, a direct coupling between on the one hand the traveling speeds and on the other hand the hang-in capacity and degree of filling has been accomplished.

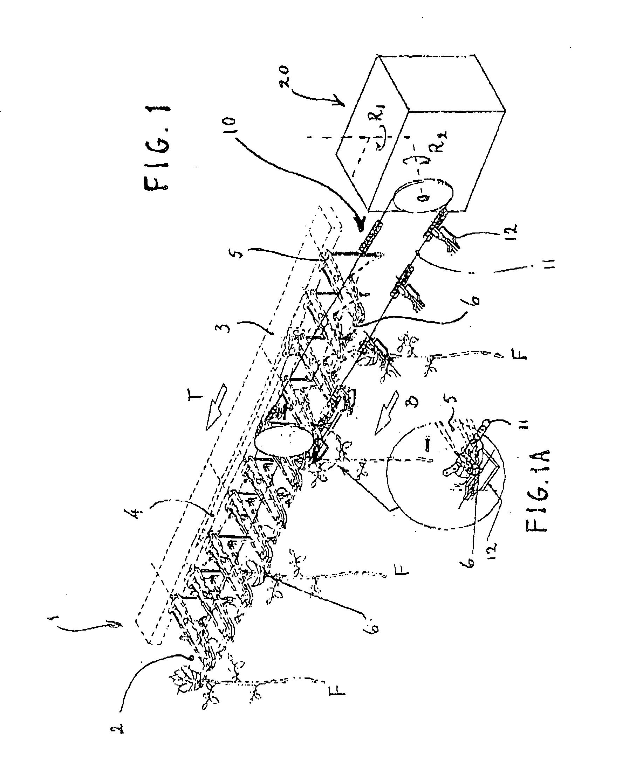

Further details and a further explanation are given with reference to a drawing, in which
Figure 1 schematically shows a perspective view of an apparatus according to the invention, and
Figure 1A shows an enlarged detail of the view according to Fig. 1.
In the two figures, the same parts have the same reference characters.

The schematic view according to Fig. 1 shows a part of a sorting apparatus for flowers F, with a conveyor 1 having conveyor transport direction T, by which the flowers after being manually hung in buffer forks 12 of a hang-in buffer conveyor 10 having transport direction B, are taken over with forks 6 of the conveyor 1. After this take-over, these flowers F are generally passed along at least a single detection station where, as a characteristic, for instance the stem length of each flower is determined, after which these data are stored in a computer, on the basis of which subsequently the selective delivery along a next part of the conveyor 1 is controlled. Measured in each case at a fixed position, the number of forks 6 passing per second is denoted as Nᵥ, and the number of buffer forks 12 passing per second is denoted as N_{b}.

The forks 6 of the conveyor 1 form part of arm-fork units 5 which are described in detail in the above-mentioned European patent application 01204055.6. These units are connected, at generally fixed intermediate distances, to an endless conveyor chain 2, schematically indicated in the figure, which is driven in a horizontal plane in a direction of rotation R1. More particularly, there is shown the part of the sorting apparatus that functions as presenting element 3, whereby the arm-fork units 5, at the command of, for instance, the above-mentioned computer, are passed via a profiled piece 4 with the fork in the correct position to the correct position along the hang-in buffer conveyor 10.

The buffer forks 12 of the hang-in buffer conveyor 10 are connected, generally at fixed intermediate distances, to an endless buffer transport element, such as, for instance, a buffer chain 11, which is driven in direction of rotation R2. This direction of rotation is generally not located in a horizontal plane. In the figure, a substantially vertical plane is indicated, but other directions are also possible. Also, different types of transport elements, such as belts of metal or plastic, can be used for this purpose. Such belts can be utilized with great advantage in the case of very long paths, for instance starting from the cultivation site, more particularly fixed hang-in stations in a glasshouse. This yields a considerable saving on operations and transport from such glasshouses, which can cover considerable floor surfaces and thus entail great transport distances.

In Fig. 1, and in more detail in Fig. 1A, it is further indicated how such a buffer fork 12 is rotated to the proper take-over position, so that a flower F hanged therein can be carried along with a fork 6 without being damaged. It will be clear to anyone skilled in the art that there are many ways of rotating a fork in this way. Furthermore, it is noted that the proper position of the forks 6 is for instance achieved as described, for instance, in the above-mentioned European patent application 01204055.6. The positions of the two forks during take-over of a flower F are represented in detail in Fig. 1A.

As already indicated above, it has been found that manually hanging flowers in the forks 6 of conveyor 1 yields an insufficient degree of filling at high passing speeds Nᵥ of the forks 6. With at least a single buffer conveyor 10, for instance in combination with manual hanging-in, while selecting the passing speed N_{b} of the buffer forks 12 of the buffer conveyor 10 to be significantly lower than that of the conveyor 1, a sufficient degree of filling can be obtained. To obtain a still further or even fully automated filling, several buffer conveyors 10 can be arranged in line along such a conveyor 1.

According to the invention, the conveyor and the at least single buffer conveyor are, coupled, driven by a chain control element accommodated, for instance, in a chain control box 20, as schematically shown in Fig. 1. In particular, this coupling can comprise a gear transmission coupling, with well-selected transmission ratios of the associated respective chains, for instance a ratio r = 3. Given equal intermediate distances of the forks in the two chains, it can then be seen that each third fork 6 can take over a flower F from a buffer fork 12, in which case Nᵥ = 3 N_{b}. It will be clear that depending on such dimensioning any other combination is possible.

It will be clear to any skilled person that further small modifications within the scope of the appended claims are possible. Thus, many controls other than couplings in gear boxes will be possible. This should specifically be understood to include separate drives controlled directly with a computer. Furthermore, it will be clear that further fork movements, not represented in detail here, can improve handling of the flowers F, in particular understood to include fork movements which in case of failure of take-over will not cause an interruption of the ongoing movement of conveyor 1, but will prevent such interruptions.

## Claims

1. An apparatus for sorting flowers (F), having in a horizontal plane a conveyor (1) with an endless conveyor chain (2) having attached thereto, at predetermined intermediate distances, forks (6) movable between at least two positions, being a transport position and a hang-in position,
having at least a single detection station for determining at least a single corresponding characteristic of each flower (F), and having a computer for recording the characteristic, and, in accordance therewith, delivering each flower (F) at discharge stations arranged for that purpose,
**characterized in that**
the apparatus further comprises at least a single hang-in buffer conveyor (10) with an endless buffer transport element (11) having buffer forks (12) attached thereto, from which the flowers (F) hanging therein are taken over by said forks (6), while the passing speed of the forks (6), Nᵥ, and that of the buffer forks (12), N_{b}, meet Nᵥ > N_{b}.

2. An apparatus according to claim 1, **characterized in that**
the conveyor chain (2) and the buffer transport element (11) are driven, mutually coupled, with a control element.

3. An apparatus according to claim 2, **characterized in that**
the buffer transport element (11) comprises a buffer chain, and
that the control element comprises a gear transmission coupling.

4. An apparatus according to any one of the preceding claims,
**characterized in that** the passing speeds of the respective forks (6,12) are in the ratio of Nᵥ = 3 N_{b}.

5. An apparatus according to claim 1, 2, or 4, **characterized in that**
the buffer transport element (11) has such a length that, with it, transport of flowers (F) from a cultivation site takes place.

## Patentansprüche

1. Vorrichtung zum Sortieren von Blumen (F), die in einer horizontalen Ebene eine Fördereinrichtung (1) mit einer endlosen Transportkette (2) aufweist, an der Gabeln (6) an zwischenliegenden vorgegebenen Abständen befestigt sind, die zwischen wenigstens zwei Stellungen beweglich sind, die eine Transportstellung und eine Einhängstellung sind, wobei die Vorrichtung wenigstens eine einzelne Erfassungsstation zum Feststellen wenigstens einer einzelnen entsprechenden Eigenschaft jeder Blume (F) und einen Computer zum Aufnehmen der Eigenschaft und zum Liefern jeder Blume (F) in Übereinstimmung damit an Endladestationen, die zu diesem Zweck angeordnet sind, umfasst,
**dadurch gekennzeichnet, dass**
die Vorrichtung ferner wenigstens eine einzelne Einhäng-Puffer-Fördereinrichtung (10) mit einem endlosen Puffer-Transportelement (11) umfasst, das daran befestigte Puffer-Gabeln (12) aufweist, von denen die darin hängenden Blumen (F) von den Gabeln (6) übernommen werden, wobei die Durchlaufgeschwindigkeit der Gabeln (6), Nᵥ, und diejenige der Puffer-Gabeln (12), N_{b}, die Bedingung Nᵥ> N_{b} erfüllt.

2. Vorrichtung nach Anspruch 1, **dadurch gekennzeichnet, dass** die Transportkette (2) und das Puffer-Transportelement (11) in gegenseitiger Kopplung mit einem Steuerelement angetrieben werden.

3. Vorrichtung nach Anspruch 2, **dadurch gekennzeichnet, dass** das Puffer-Transportelement (11) eine Pufferkette aufweist und dass das Steuerelement eine Getriebeübertragungskopplung umfasst.

4. Vorrichtung nach einem der vorhergehenden Ansprüche, **dadurch gekennzeichnet, dass** die Durchlaufgeschwindigkeiten der entsprechenden Gabeln (6, 12) ein Verhältnis von Nᵥ = 3 N_{b} aufweisen.

5. Vorrichtung nach Anspruch 1, 2 oder 4, **dadurch gekennzeichnet, dass** das Puffer-Transportelement (11) eine derartige Länge aufweist, dass damit ein Transport von Blumen (F) aus einer Anbaustelle stattfindet.

## Revendications

1. Appareil pour trier des fleurs (F), ayant dans un plan horizontal un transporteur (1) avec une chaîne de transporteur sans fin (2) à laquelle sont attachées, à des distances intermédiaires prédéterminées, des fourchettes (6) mobiles entre au moins deux positions, soit une position de transport et une position de suspension, ayant au moins un poste de détection individuel pour déterminer au moins une caractéristique correspondante unique de chaque fleur (F), et ayant un ordinateur pour enregistrer la caractéristique, et, en fonction de celle-ci, distribuer chaque fleur (F) au niveau de postes de déchargement disposés à cet effet,
**caractérisé en ce que** l'appareil comprend de plus au moins un transporteur intermédiaire de suspension individuel (10) avec un élément de transport intermédiaire sans fin (11) ayant des fourchettes intermédiaires (12) qui y sont attachées, à partir desquelles les fleurs (F) qui sont suspendues dans celles-ci sont reprises par lesdites fourchettes (6), tandis que la vitesse de passage des fourchettes (6), Nᵥ, et celle des fourchettes intermédiaires (12), N_{b}, sont telles que Nᵥ> N_{b}.

2. Appareil selon la revendication 1,
**caractérisé en ce que** la chaîne du transporteur (2) et l'élément de transport intermédiaire (11) sont entraînés, de façon mutuellement accouplée, par un élément de commande.

3. Appareil selon la revendication 2,
**caractérisé en ce que** l'élément de transport intermédiaire (11) comprend une chaîne intermédiaire, et **en ce que** l'élément de commande comprend un accouplement de transmission à engrenage.

4. Appareil selon une quelconque des revendications précédentes,
**caractérisé en ce que** les vitesses de passage des fourchettes respectives (6,12) sont dans le rapport de Nᵥ = 3 N_{b}.

5. Appareil selon la revendication 1, 2 ou 4,
**caractérisé en ce que** l'élément de transport intermédiaire (11) a une longueur telle que, avec lui, le transport des fleurs (F) depuis un site de culture a lieu.
